(19) **Europäisches Patentamt**

**European Patent Office**

**Office européen des brevets**

(11) Veröffentlichungsnummer: **0 347 632**

**A1**

(12) **EUROPÄISCHE PATENTANMELDUNG**

(21) Anmeldenummer: **89110011.7**

(22) Anmeldetag: **02.06.89**

(51) Int. Cl.⁴: **G08C 17/00**

(30) Priorität: **20.06.88 DE 3820789**

(43) Veröffentlichungstag der Anmeldung:
**27.12.89 Patentblatt 89/52**

(84) Benannte Vertragsstaaten:
**AT BE CH DE ES FR GB GR IT LI NL SE**

(71) Anmelder: **REGELTRON COMPUTER GMBH**
**Am Niederfeld 17**
**D-7060 Schorndorf 5(DE)**

(72) Erfinder: **Bischof, Alois, Ing.**
**Lagerstrasse 15**
**CH-9470 Buchs(CH)**
Erfinder: **Schmid, Max, Ing.**
**Lagerstrasse 15**
**CH-9470 Buchs(CH)**
Erfinder: **Poloczek, Lothar, Ing.**
**Remsstrasse 133**
**D-7060 Schorndorf(DE)**
Erfinder: **Kramer, Hannsgeorg, Ing.**
**Stockbrunnenweg**
**D-7321 Börtlingen(DE)**

(74) Vertreter: **Seemann, Norbert W.**
**Brehmstrasse 37**
**D-7320 Göppingen(DE)**

(54) **Gerät zur bedienungsfreien Erfassung und Speicherung von Messwerten.**

(57) Ein Gerät zur Erfassung und Speicherung von
Meßdaten besteht aus einem Gehäuse ( 1 ) in dem
eine Platine ( 2 ) mit den elektronischen Bauteilen (
3 ) sowie einer eigenen Stromquelle ( 6 ) untergebracht ist. Das Gehäuse ( 1 ) weist keinerlei außenliegende Bedienungselemente auf und ist mit der
Platine ( 2 ) derart gekapselt, daß ohne mechanische
Zerstörung diese Verbindung nicht trennbar ist.

## Gerät zur bedienungsfreien Erfassung und Speicherung von Meßwerten

Die Erfindung bezieht sich auf ein Gerät nach dem Oberbegriff des Hauptanspruchs.

Datenerfassungsgeräte dieser Art sind für die unterschiedlichsten Anwendugnsfälle bereits in vielen baulichen Variationen bekannt, jedoch haben alle bislang bekannten Geräte den Nachteil, daß sie einerseits von Zeit zu Zeit in irgendeiner Form gewartet werden müssen und zudem auch auf die unterschiedlichste Weise manipuliert werden können und somit keine absolute Sicherheit für den verantwortlichen Anwender bieten.

Die Aufgabe der vorliegenden Erfindung besteht deshalb auch darin, ein Datenerfassungsgerät der eingangs genannten Art zu schaffen, das absolut wartungsfrei und in keiner Form von Unbefugten manipulierbar ist.

Gelöst wird diese Aufgabe dabei in überraschend einfacher Art durch die in den Patentansprüchen angegebenen Mittel und Maßnahmen, die im folgenden anhand einer Systemskizze noch näher erläutert sind.

Das dargestellte Datenerfassungsgerät besteht in seinem Grundaufbau aus einem dem jeweiligen Verwendungszweck entsprechend, in jeder Art angepaßten Gehäuse mit darin liegender, die elektronischen Bauteile 3 enthaltender Platine 2. Grundsätzlich neu hierbei ist nun, daß Gehäuse 1 und Platine 2 eine staub-und feuchtigkeitsdicht gekapselte sowie ohne mechanische Zerstörung nicht trennbare bauliche Einheit bilden, wobei im weiteren wichtig ist, daß dieses Gehäuse 1 z.B. aus lebensmittelunschädlichem, hygienischem Kunststoff besteht, keinerlei Bedienungselemente aufweist und Voreinstellungen bzw. Datenverarbeitung durch das geschlossene Gehäuse 1 hindurch mittels Infrarot-Strecken o.ä. mit externen Peripherieprodukten erfolgt. Durch diese erstmals vorgeschlagene Ausgestaltung werden in überzeugender Weise die mit der Aufgabenstellung geforderte, absolute Wartungsfreiheit und Nicht-Manipulierbarkeit geschaffen.

Zur weiteren Detailausgstaltung dieser Erfindung zählen noch eine im Gehäuse 1 ebenfalls integrierte eigene Stromversorgung, z.B. Batterie 6 und Anschlußelemente 4 am Gehäuse 1 zum Verbinden des Moduls mit einer separaten Auswerteinheit sowie ein in das Gehäuse 1 vorzugsweise integrierter, ggf. jedoch auch getrennt von letzterem angeordneten Meßfühler 5. Bei Verwendung der vorliegenden Erfindung beispielsweise als Temperatur-Erfassungsgerät mit Ablage der in periodischen Zeitabständen erfaßten Daten in einem Ringspeicher, ist seine Lebensdauer ausschließlich von der Betriebsdauer der internen Stromquelle 6 abhängig. Letzlich zeichnet sich das neue Gerät noch durch Zuordnung berührungsloser Sensoren zum Zwecke der "In-Position" Erkennung aus.

Als wichtigste Merkmale des neuen Gerätes sind daher nochmals festzuhalten, daß Gehäuse 1 und Platine 2 eine staub- und feuchtigkeitsdicht gekapselte sowie ohne mechanische Zerstörung nicht trennbare bauliche Einheit bilden, bei der die Erfassung und Abspeicherung der Meßwerte in vom Anwender festzulegenden Zeitintervallen mit Abspeicherung der Meßzeiträume über einen selbstlöschenden Ringspeicher erfolgt. Dadurch erhält man bei absolut wartungsfreiem Betrieb einen ständigen Rückblick über die abgespeicherten Meßwerte des vergangenen Meßzeitraumes. Zusätzlich registriert das Gerät selbsttätig, ob es sich in der vom Anwender bestimmten Position befindet. Durch das Ringspeicher-Prinzip, stromsparende Bauteile, automatische " Sleep-Funktion " der Elektronik zwischen den Meßintervallen und stromsparende, manipulationssichere Bedienung über kontaktlose Infrarot-Lichtstrecken wird ein wartungsfreier, manipulationssicherer Betrieb über mehr als fünf Jahre erreicht. Für den Einsatz im Lebensmittelbereich wurde für das hermetisch geschlossene Gehäuse ein absolut lebensmittelechter Kunststoff gewählt.

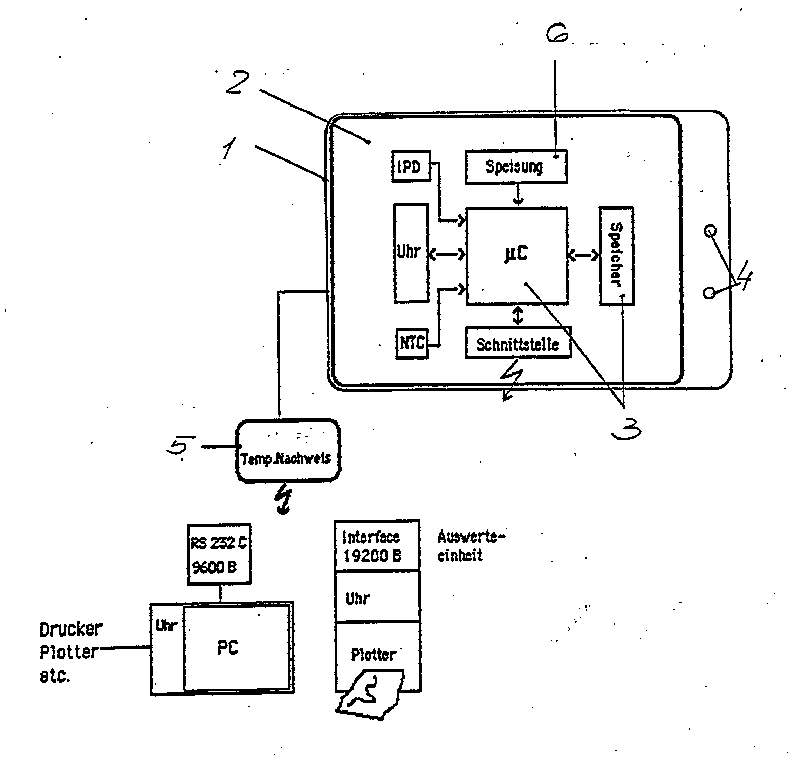

### Ansprüche

1. Gerät zur bedienungsfreien Erfassung und Speicherung von Meßwerten über einen mehrjährigen Zeitraum, bestehend aus einem handlichen Gehäuse ( 1 ) mit darin untergebrachter, die dem jeweiligen Zweck entsprechenden, elektronischen Bauteile ( 3 ) enthaltenden Platine ( 2 )
**gekennzeichnet durch:**

a. Erfassung und Abspeicherung der Meßwerte in vom Anwender festzulegenden Zeitintervallen mit Abspeicherung der Meßzeiträume über einen selbstlöschenden Ringspeicher.

b. Eine im Gehäuse integrierte, mikroprozessorunterstützte, stromsparende Elektronik und berührungslose Infrarot-Technologie zur Vorwahl der Zeitintervalle, der Meßbereiche und zum Auswerten des Gerätes auf einem externen PC oder Plotter.

c. Mittel für die zusätzlich zum Meßwert und der Zeitzuordnung abzuspeichernde Information zur Kontrolle der vom Anwender gewünschten Position des Gerätes.

2. Gerät nach Anspruch 1,
**gekennzeichnet durch**
die Möglichkeit einer externen Plombierung.

3. Gerät nach den Ansprüchen 1 und 2,
**gekennzeichnet durch**
ein hermetisch geschlossenes Gehäuse ( 1 ) aus absolut lebensmittelunschädlichem Kunststoff ohne äußere Bedienungselemente, im Gehäuse ( 1 ) integrierter eigener Stromversorgung, z. B. Batterie ( 6 ) und Anschlußelementen ( 4 ) am Gehäuse ( 1 ) zum Verbinden des Moduls mit einer separaten Auswerteinheit sowie einen in das Gehäuse ( 1 ) vorzugsweise integrierten, ggf. jedoch auch getrennt von letzterem angeordneten Meßfühler ( 5 ).

Europäisches Patentamt

**EUROPÄISCHER RECHERCHENBERICHT**

Nummer der Anmeldung

EP 89 11 0011

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 941 363 (DEUTSCHE FORSCHUNGS- UND VERSUCHSANSTALT FUER LUFT- UND RAUMFAHRT E.V.) * Figur 1; Anspruch 1 * --- | 1 | G 08 C 17/00 |
| A | US-A-3 791 377 (T. E. NORBY et al.) * Figur 1; Spalte 2, Zeilen 52-58 * --- | 3 | |
| Y | US-A-4 599 745 (R. H. BARAN et al.) * Figur 1; Spalte 5, Zeile 11 - Spalte 7, Zeile 24 * --- | 1 | |
| Y | DE-A-2 232 875 (J.E.N. RICHALET) * Figuren 1,3; Ansprüche 1,3 * --- | 1 | |
| A | DE-U-7 732 806 (LANDIS & GYR ZUG AG) * Figur 1; Seite 4, Zeile 13 - Seite 6, Zeile 11 * --- | | |
| A | PATENT ABSTRACTS OF JAPAN Band 6, Nr. 151 (E-124)(1029), 11. August 1982; & JP - A - 57 075096 (SHARP) 11.05.1982 ----- | | RECHERCHIERTE SACHGEBIETE (Int. Cl.4) G 08 C |

Der vorliegende Recherchenbericht wurde für alle Patentansprüche erstellt

| Recherchenort | Abschlußdatum der Recherche | Prüfer |
|---|---|---|
| BERLIN | 25-09-1989 | BREUSING J |